# EUROPÄISCHE PATENTSCHRIFT

(11) **EP 0 728 710 B1**
(45) Veröffentlichungstag und Bekanntmachung des Hinweises auf die Patenterteilung: **16.09.1998**
(21) Anmeldenummer: 96100480.1
(22) Anmeldetag: 15.01.1996
(51) Int. Cl.: C03C 8/06, C03C 3/118, C03C 3/066

(54) **Bleifreie Glaszusammensetzung und deren Verwendung**
Lead-free glass composition and its use
Composition de verre exempte de plomb et son utilisation

(30) Priorität: 22.02.1995 DE 19506123
(43) Veröffentlichungstag der Anmeldung: 28.08.1996
(73) Patentinhaber: CERDEC AKTIENGESELLSCHAFT KERAMISCHE FARBEN, D-60327 Frankfurt (DE)
(72) Erfinder: Heitmann, Oliver, 68169 Mannheim (DE); Tünker, Gerhard, D-63075 Offenbach (DE)

(56) Entgegenhaltungen:
- EP-A- 0 025 187
- EP-A- 0 086 109
- DATABASE WPI Section Ch, Week 8629 Derwent Publications Ltd., London, GB; Class L01, AN 86-185359 XP002002549 & JP-A-61 117 132 (NIPPON FRIT KK) , 4.Juni 1986

## Beschreibung

Die Erfindung richtet sich auf eine neue bleifreie Glaszusammensetzung, eine Glasfritte dieser Zusammensetzung und ein Verfahren zu ihrer Herstellung. Ein weiterer Gegenstand der Erfindung richtet sich auf eine die erfindungsgemäße Glasfritte enthaltende Farbzubereitung und deren Verwendung zur Herstellung von Glasemails für Glas, insbesondere Architekturglasscheiben sowie Geräteglas, und andere einbrennfähige Substrate.

Zur Dekoration von Glasartikeln, insbesondere Glasscheiben, werden Glasfarben verwendet, welche eine oder mehrere farbgebende Komponenten und eine oder mehrere Glasfritten enthalten. Die Glasfarbe wird nach dem Auftrag auf das Substrat eingebrannt, wobei sich ein Glasemail ausbildet. Bei der Applikation von Glasfarben auf Glasscheiben muß das Schmelzverhalten der Glasfarben den typischen Bedingungen des Vorspannungsprozesses angepaßt sein. Typische Einbrennbedingungen sind Glastemperaturen zwischen etwa 600 und 650 °C und Brennzeiten von wenigen Minuten. Für die farbliche Dekorierung von Glasscheiben im Architektur- und Geräteglasbereich ist eine gute Verträglichkeit der in der Glasfarbe enthaltenen Glasfritte mit üblichen anorganischen Farbpigmenten erforderlich.

Von der eingebrannten Glasfarbe, also dem Glasemail, wird in vielen Einsatzbereichen, darunter auch dem Architektur- und Geräteglasbereich, ein glatter Verlauf bei kurzen Brennzeiten bei möglichst niedriger Temperatur, vollständige Rißfreiheit, eine gute chemische Resistenz gegen Säuren und Laugen sowie eine gute Beständigkeit gegen Witterungseinflüsse gefordert. Schließlich sollten in der in der Glasfarbe enthaltenen Glasfritte aus Kostengründen möglichst keine größere Menge teurer Rohstoffe und aus ökotoxikologischen Gründen im wesentlichen weder Blei noch Cadmium enthalten sein.

In der Fachwelt sind verschiedene blei- und cadmiumfreie Glasfritten und sie enthaltende Farbzubereitungen für verschiedene Anwendungen, darunter die Ausbildung von Glasemails auf Autoglasscheiben, Architektur- und Geräteglas, bekannt. Üblicherweise handelt es sich hierbei um Frittensysteme auf der Basis eines Wismut-Alkali-Borsilikatglases oder eines Alkali-Zink-Borsilikatglases oder Mischungen davon.

Bekannte Glasfrittensysteme erfüllen die vorgenannten Erfordernisse nur teilweise: So basiert die blei- und cadmiumfreie Glasfritte gemäß EP-A 0 267 154 auf einem Gehalt an Na₂O, ZnO, B₂O₃ und SiO₂ und kann einige weitere Oxide, wie Bi₂O₃ und Li₂O, enthalten. Wie die Beispiele zeigen, erfüllen aber nur Glasfritten mit einem Bi₂O₃- oder Li₂O-Gehalt den für die Anwendung auf Glas geforderten Aufschmelzbereich von deutlich unterhalb 650 °C. Nachteilig an lithiumhaltigen Glasfritten ist, daß es hiermit zur Verminderung der Bruchfestigkeit von damit emaillierten Glasscheiben kommt. Gerade bei Architekturglasscheiben kommt es bei Li-haltigen Glasfritten in sie enthaltenden Farbzubereitungen während des Einbrennens des Glasemails zu einem Austausch von Li des Emails mit Na des Glases und in dessen Folge zu Zugspannungen und Rißbildung.

In der EP-A 0 370 683 werden ein Glasfluß mit 45 bis 65 Gew.-% Bi₂O₃ sowie eine solche Fritte enthaltende Farbzubereitungen zur Herstellung von Glasemails beschrieben. Die Verwendung derartiger Farbzubereitungen eignen sich gut zur Herstellung von emaillierten Autoglasscheiben und zur Dekorierung anderer Glasartikel. Glasfritten mit hohem Wismutgehalt zeigen zwar niedrige Erweichungspunkte und ein gutes Schmelzverhalten, jedoch sind derartige Fritten in Abhängigkeit vom Wismutgehalt viel teurer als wismutarme oder wismutfreie Glasfritten. Zudem enthält der Glasfluß gemäß EP-A 0 370 683 auch 2 bis 6 Gew.-% Li₂O, was besonders bei höheren Schichtstärken, z.B. Mehrfachdrucke oder Spritzauftrag, zur zuvor erwähnten Schwächung der Bruchfestigkeit des emaillierten Glases führt.

Die JP-A 56-155040 offenbart Glasfritten auf der Basis eines Borsilikatglases, das 20 bis 60 Gew.-% SiO₂, 10 bis 30 Gew.-% B₂O₃, 10 bis 30 Gew.-% Na₂O, 1 bis 15 Gew.-% K₂O, 1 bis 10 Gew.-% Li₂O, 1 bis 15 Gew.-% ZnO und 1 bis 15 Gew.-% TiO₂ enthält. Ein Gehalt an Li₂O wird zwingend vorgeschrieben, was den bereits genannten Nachteil mit sich bringt. In diesem Dokument wird von einer Mitverwendung von Fluor im Frittenansatz wegen der damit verbundenen großen Gefahr abgeraten.

Aus der EP-A 0 086 109 ist eine niedrig schmelzende blei- und phosphorfreie Emailfritte bekannt, welche sich unterhalb der Transformationstemperatur von Eisen (723 °C) einbrennen läßt. Die Fritte enthält in Gew.-%: 31 - 39 SiO₂, 13 - 21 B₂O₃, 14 - 21 Na₂O, 1 - 5 K₂O, 5 - 20 ZnO, 2 - 10 F₂ und wenigstens eines der Oxide Al₂O₃, ZrO₂, TiO in einer Menge von je höchstens 5 Gew.-%, wobei die Summe aus ZnO, Al₂O₃, TiO₂ und ZrO₂ 17 bis 25 Gew.-% und jene aus Na₂O mit K₂O 16 bis 23 Gew.-% beträgt.

Eine weitere bleifreie Fritte mit niedriger Schmelztemperatur und eine spezielle Eigenschaftskombination lehrt die EP-A 0 025 187: Die Fritte enthält in Gew.-%: 13 - 24 Alkalioxide, 14 - 27 B₂O₃, 2 - 8 Al₂O₃, 35 - 55 SiO₂, 0,75 - 4 F und wenigstens 5 Gew.-% von zwei Oxiden aus der Reihe TiO₂, ZnO und P₂O₅.

Die JP-A 61 117 132 (Derwent AN 86-185359) lehrt eine bei 650 bis 750 °C einbrennbare Emailfritte, enthaltend in Gew.-%: 30 - 50 SiO₂, 5 - 25 B₂O₃, 10 - 30 (Na₂O + K₂O + Li₂O), 5 - 25 Na₂O, 0 - 10 K₂O, 1 - 5 Li₂O, 5 - 15 TiO₂, 1 - 10 P₂O₅, 0,5 - 10 BaO sowie etliche fakultative Oxide.

Aufgabe der vorliegenden Erfindung ist demgemäß, eine neue Glaszusammensetzung, insbesondere in Form einer Glasfritte, aufzuzeigen, welche sich zur Herstellung von Glasuren, Emails, insbesondere Glasemails für Architektur- und Geräteglas, und anderen keramischen Dekorüberzugsmassen besser eignet, insbesondere bei niedriger Brenntemperatur ohne Rißbildung appliziert werden kann und eine gute Säurebeständigkeit zeigt, als die vorbekannten Systeme. Der Einbrennbereich im 3- bis 5-Minuten-Brand sollte vorzugsweise bei Glastemperaturen zwischen 600 und unter 650 °C liegen. Die neuen Glaszusammensetzungen sollten im wesentlichen blei-, cadmium-, lithium- und P₂O₅-frei sein und die Anwesenheit des teuren Bi₂O₃ möglichst nicht erfordern, um die zuvor aufgezeigten nachteiligen Einflüsse dieser Elemente zu vermeiden.

Die Aufgabe wird gelöst durch eine Glaszusammensetzung, enthaltend (in Mol-%)

| | |
|---|---|
| Na₂O | 10 - 15 |
| K₂O | 0,1 - 2 |
| Li₂O | kleiner 0,5 |
| SiO₂ | 40 - 50 |
| B₂O₃ | 8 - 12 |
| TiO₂ | 4 - 7 |
| Al₂O₃ | 0,1 - 3 |
| ZnO | 13 - 17 |
| F | 1 - 5 |

und weniger als jeweils 0,5 Gew.-% Oxide aus der Reihe PbO, CdO, P₂O₅ und Erdalkalimetalloxide.

Vorzugsweise enthält die Glaszusammensetzung weniger als 0,1 Mol-% Li₂O, insbesondere im wesentlichen kein Li₂O. Zweckmäßigerweise enthält die Zusammensetzung weniger als 5 Gew.-% andere als die zuvor angegebenen Metalloxide. Eine bevorzugte Glaszusammensetzung besteht im wesentlichen aus (in Mol-%):

| | |
|---|---|
| Na₂O | 10 - 14 |
| K₂O | 0,5 - 2 |
| SiO₂ | 40 - 50 |
| B₂O₃ | 8 - 12 |
| TiO₂ | 4 - 7 |
| Al₂O₃ | 0,5 - 2 |
| ZnO | 13 - 17 |
| F | 1 - 5. |

Eine besonders bevorzugte Glaszusammensetzung besteht aus (in Mol-%):

| | |
|---|---|
| Na₂O | 11 - 14 |
| K₂O | 1 - 2 |
| SiO₂ | 40 - 45 |
| B₂O₃ | 9 - 11 |
| TiO₂ | 4 - 7 |
| Al₂O₃ | 1 - 2 |
| ZnO | 14 - 16 |
| F | 1 - 3. |

Üblicherweise liegt der Transformationspunkt T_{g}, gemessen mittels der DSC-Methode (Differential Scanning Calorimetrie) unterhalb 500 °C und der Erweichungspunkt unterhalb 600 °C.

Wie zuvor dargestellt, basiert die erfindungsgemäße Fritte auf einer Glaszusammensetzung auf der Basis von Na₂O, K₂O, B₂O₃, Al₂O₃, TiO₂, ZnO und SiO₂, wobei in der Glasmatrix außer Sauerstoff auch Fluor als anionische Komponente enthalten ist. Erfindungswesentlich ist ferner, daß die Fritte im wesentlichen frei ist von Li₂O, PbO, CdO, P₂O₅ sowie Erdalkalimetalloxiden. Geringe Anteile (kleiner 0,5 Gew.-%) an den an sich unerwünschten Oxiden können einerseits als Verunreinigungen in den verwendeten Rohstoffen für die Glasherstellung und andererseits durch Reste eines diese unerwünschten Stoffe enthaltenden Glases im verwendeten Glasschmelzofen in die neue Glaszusammensetzung gelangen. Vorzugsweise wird der Gehalt an diesen unerwünschten Oxiden möglichst niedrig gehalten; vorzugsweise wird die Anwesenheit dieser Oxide vollständig vermieden.

Zweckmäßigerweise liegt die Glaszusammensetzung in Form einer Glasfritte vor. Glasfritten sind in an sich bekannter Weise erhältlich, indem übliche Glasrohstoffe in einer molaren Zusammensetzung im wesentlichen entsprechend der Zusammensetzung der herzustellenden Glasfritte zusammengeschmolzen werden, die Schmelze abgeschreckt wird, etwa durch Einlaufenlassen eines Schmelzstrahls in Wasser, und das hierbei erhaltene brüchige Material aufgemahlen wird. Als Rohstoffe zur Herstellung der erfindungsgemäßen Glasfritte werden Na₂O und K₂O üblicherweise in Form eines oxidbildenden Rohstoffes, meistens als Carbonat oder ganz oder teilweise als Fluorid, eingesetzt. Zweckmäßigerweise werden Al₂O₃ als wasserfreie Tonerde und/oder als Kryolith, B₂O₃ als Borsäure und/oder Alkalimetallborat, ZnO, TiO₂ und SiO₂ in Form des Oxids in den Glasansatz eingebracht.

Zur Einstellung des Fluorgehalts wird dieses gegenüber dem angestrebten Gehalt in der Fritte im Überschuß, üblicherweise im ein- bis mehrfachen, insbesondere 1- bis 3-fachen, molaren Überschuß in Form eines Fluorids eingesetzt. Fluor wird während der Glasschmelze teilweise als HF und/oder in anderer Form ausgetragen. Um den Anforderungen an den Umweltschutz und Arbeitshygiene gerecht zu werden, sollte der Glasschmelzofen mit einer wirksamen Fluorabsorptionseinrichtung ausgestattet sein. Bei Verwendung wasserfreier Rohstoffe und Fluoriden aus der Reihe NaF, KF, ZnF₂, Na₃AlF₆ ist der Fluoraustrag am geringsten.

Nachfolgend wird auf die wesentlichen Funktionen der Hauptkomponenten der Glaszusammensetzung der Glasfritte eingegangen:

Als Alkalikomponente sind in der Glaszusammensetzung typischerweise nur Natriumoxid und Kaliumoxid anwesend. Durch teilweise Substitution von Na₂O durch K₂O kommt es zu einer deutlichen Absenkung des Schmelzpunktes (Mischalieffekt). Durch eine Erhöhung des Alkaligehalts auf mehr als 17 Mol-% insgesamt kann zwar der Schmelzpunkt weiter erniedrigt werden, jedoch steigt dabei der Wärmeausdehnungskoeffizient in unerwünschter, für Bauglasanwendungen intolerabler Weise an. Die K₂O-Menge ist limitiert, weil es bei einer nennenswerten Steigerung über 2 Mol-% zu unerwünschten Kristallisationseffekten kommt. Die Summe aus Na₂O und K₂O liegt vorzugsweise zwischen etwa 13 und 15 Mol-%. Durch Borsäure wird der Schmelzpunkt der Fritte abgesenkt, jedoch kommt es in Verbindung mit dem gleichzeitig anwesenden Zinkoxid bei einer Menge oberhalb 12 Mol-% zu einer unerwünschten Verschlechterung der Säurebeständigkeit. Im Hinblick auf eine gute Säureresistenz wird auch der ZnO-Gehalt in engen Grenzen gehalten. Durch die Anwesenheit von Titandioxid wird die Säurebeständigkeit erhöht. Überraschenderweise läßt sich trotz des anspruchsgemäßen Titandioxidgehalts in der erfindungsgemäßen Glaszusammensetzung die Glasfritte homogen und ohne vorzeitige Kristallisationseffekte erschmelzen. SiO₂ dient als Glasbildner; ein Gehalt unter 40 Mol-% SiO₂ führt zu einer unerwünschten Absenkung der Säureresistenz, ein Gehalt über 50 Mol-% zu einer Schmelzpunkterhöhung. Aluminiumoxid ist zwecks Erhöhung der chemischen Resistenz als obligatorischer Bestandteil in geringer Menge in der Glaszusammensetzung enthalten; durch eine größere Menge würde der Schmelzpunkt zu stark erhöht werden. Wismutoxid, das einerseits die chemische Beständigkeit erhöht, andererseits den Schmelzpunkt absenkt, kann zwar anwesend sein, ist jedoch nicht notwendig; aus Kostengründen wird auf einen Einsatz von Bi₂O₃ vorzugsweise verzichtet. Zwecks Absenkung des Schmelzpunktes der Glasfritte und Erniedrigung der Einbrenntemperatur wird innerhalb des anspruchsgemäßen Bereichs ein möglichst hoher F-Gehalt in der Glaszusammensetzung bevorzugt. Bei zu hohem F-Gehalt kann es zu einer Absenkung der chemischen Resistenz und Trübung der Glasfritte kommen. Im Glasansatz werden vorzugsweise 5 bis 10 Mol-% Fluor, bezogen auf ein Mol des Glases, eingesetzt.

Die erfindungsgemäßen Glasfritten lassen sich zu einer porenfreien Glasschicht aufschmelzen. Nach dem eigentlichen Schmelzprozeß kommt es zu keinen Kristallisationseffekten oder Trübungen, was im Hinblick auf die Verwendbarkeit der Glasfritte in brillanten Glasfarben für den Bauglassektor von Bedeutung ist. Das Schmelzverhalten der Glasfritten läßt sich mittels DSC (Differential Scanning Calorimetrie) bestimmen: Hiernach liegt der Transformationspunkt T_{g} im allgemeinen unterhalb 500 °C, meist zwischen 470 und 490 °C; der Erweichungspunkt (endset) liegt unterhalb 600 °C, meist zwischen 560 und 590 °C. Für die Praxis von größerer Bedeutung ist die Mindestschmelztemperatur: Die Mindesteinbrenntemperatur Tₛ bevorzugter erfindungsgemäßer Glasfritten liegt unter 640 °C, vorzugsweise im Bereich zwischen 600 und 630 °C beim 3- bis 5-Minuten-Brand. Die Mindestschmelztemperatur Tₛ wird beispielsweise im 3-Minuten-Brand auf Glas als Substrat ermittelt, wobei als Beurteilungskriterium die Porenfreiheit der aufgeschmolzenen und damit eingebrannten Glasfritte herangezogen wird. Besonders bevorzugte Glasfritten lassen sich gut im 3-Minuten-Brand bei 620 bis 630 °C einbrennen. Sofern im Hinblick auf die Anwendung eine niedrigere Mindesteinschmelztemperatur gewünscht wird, läßt sich eine solche gegebenenfalls unter Inkaufnahme einer verminderten Säureresistenz oder höherer Kosten durch Verwendung eines Gemischs aus einer erfindungsgemäßen Glasfritte und einer vorbekannten bleifreien Glasfritte mit niedrigerer Schmelztemperatur erzielen.

Durch die stofflich ausgewählte und eng begrenzte Zusammensetzung der erfindungsgemäßen Glasfritten ist es möglich geworden, zu Glasemaildekoren zu gelangen, welche sowohl eine gute Säurebeständigkeit gegen 3 gew.-%ige Salzsäure als auch eine sehr gute Laugenbeständigkeit gegen 10 gew.-%ige NaOH bei Raumtemperatur nach 5 Minuten Einwirkungszeit zeigen. Unter Zugrundelegung einer 5-stufigen Beurteilungsskala (1 = abgelöst; 2 = abreibbar, 3 = matt, 4 = schwacher Angriff, 5 = kein Angriff) kann eingebrannten erfindungsgemäßen Glasfritten meist eine Säurebeständigkeit um 4 und stets eine Laugenbeständigkeit von 5 zugeordnet werden.

Aufgrund des unerwartet günstigen Eigenschaftsbilds der erfindungsgemäßen Glaszusammensetzung lassen sich Glasfritten mit dieser Zusammensetzung sehr gut zur Herstellung von Glasemails und anderen keramischen Dekoren verwenden. Für derartige Zwecke werden Farbzubereitungen eingesetzt, welche mindestens eine Glasfritte und ein anorganisches keramisches Farbpigment und/oder eine Farbfritte enthalten. Eine erfindungsgemäße Farbzubereitung ist demgemäß durch einen Gehalt an einer erfindungsgemäßen Glasfritte gekennzeichnet. Eine bevorzugte Farbzubereitung enthält: eine oder mehrere erfindungsgemäße Glasfritten in einer Menge von 35 bis 97 Gew.-%, ein oder mehrere Farbpigmente in einer Menge von 3 bis 30 Gew.-% und eine oder mehrere andere bleifreie Glasfritten in einer Menge von 0 bis 35 Gew.-%, etwa solche, wie sie in den zuvor zitierten Dokumenten beschrieben sind. Als Farbpigmente eignen sich die bekannten oxidischen, sulfidischen und nitridischen Farbpigmente, soweit sie unter den Einbrennbedingungen stabil sind. Bei Glasfarben für den Bauglassektor werden vorzugsweise oxidische Pigmente, etwa solche auf Spinellbasis, verwendet.

Die Farbzubereitungen können im Trockenauftrag oder vorzugsweise nach Überführung in eine Farbpaste unter Verwendung eines üblichen Mediums mittels Spritz-, Gieß- oder Siebdruckauftrag auf das Substrat aufgetragen werden. Die Farbpaste enthält eine solche Menge an einer zuvor beschriebenen Farbzubereitung, daß sie eine spritz-, gieß- oder siebdruckfähige Konsistenz aufweist. Zur Herstellung der Farbpaste wird ein für derartige Zwecke handelsübliches Medium verwendet; Siebdruckmedien enthalten im wesentlichen ein zur Suspendierung der Feststoffe geeignetes flüssiges organisches, organisch-wäßriges oder wäßriges Lösungsmittel, ein polymeres organisches Bindemittel und nach Bedarf Hilfsmittel zur Einstellung der rheologischen Eigenschaften der Paste sowie zur Beschleunigung des Trocknens nach dem Bedrucken.

Zur Herstellung eines Glasemails oder anderen keramischen Dekors auf einem einbrennfähigen Substrat schließt sich an das Aufbringen einer Schicht der email- beziehungsweise dekorbildenden Zusammensetzung auf dem Substrat der Brand bei einer substratangepaßten Temperatur an.

Zur Herstellung emaillierter Scheiben für den Bauglasbereich wird üblicherweise die Farbe im Siebdruck-, Spritz- oder Gießverfahren aufgetragen; nach dem Trocknen findet der Einbrand während des üblichen Vorspannprozesses statt. Das gute Schmelz- und Einbrennverhalten sowie die unter üblichen Bedingungen kaum auftretende Gefahr einer Kristallisation erfindungsgemäßer Glasfritten ermöglicht ihre Anwendung für Glasemails für Architekturglas und Geräteglas mit einer Dicke im Bereich von im allgemeinen 6 bis 12 beziehungsweise 3 bis 12 mm Dicke des Glassubstrats. Die Naßschichtdicke eines Glasemaildekors auf Bauglas liegt oft um 200 µm, so daß auch hier innerhalb weniger Minuten ein glattes Durchschmelzen der Glasfritte gewährleistet sein muß. Durch die Li-Freiheit der Glasfritte kommt es zu keinem Ionenaustausch mit dem Substratglas und folglich zu keinem Aufbau von Zugspannungen, und es besteht keine Gefahr von Rißbildung im Dekor.

Die erfindungsgemäße Glaszusammensetzung sowie die damit hergestellten Gegenstände zeichnen sich durch eine Reihe herausragender Eigenschaften aus: Sie sind im wesentlichen frei von Blei und Cadmium, was aus Umwelt- und toxikologischen Gründen von Bedeutung ist. Durch die im allgemeinen vollständige Abwesenheit von Lithiumverbindungen besteht keine Gefahr einer Rißbildung im Dekor und Verminderung der Bruchfestigkeit von mit der Glaszusammensetzung emaillierten Glasscheiben. Da die erfindungsgemäße Glaszusammensetzung im Regelfall kein Wismutoxid enthält, bedarf es keiner Verwendung an teuerem Wismutoxid. Unter Verwendung der Glaszusammensetzung hergestellte Glasemails zeigen ein ausgezeichnetes porenfreies Schmelzverhalten. Obgleich in der eingangs gewürdigten JP-A 56-155040 von einer Verwendung von Fluor abgeraten wird, gelang es durch Einbau von Fluor in die Glasstruktur, das Eigenschaftsbild der Glasfritte bezüglich des Schmelz- und Einbrennverhaltens überraschenderweise zu verbessern. Schließlich ist die gute Säureresistenz der unter Verwendung der erfindungsgemäßen Glaszusammensetzung erhaltenen Glasemails oder keramischen Dekore hervorzuheben.

### Beispiele B1 bis B5 und Vergleichsbeispiele VB1 bis VB5

Einige Zusammensetzungen (in Mol-%) für Versätze für die Erschmelzung erfindungsgemäßer und nicht-erfindungsgemäßer Fritten sind in der folgenden Tabelle zusammengestellt: Darüber hinaus enthält die Tabelle gemessene Eigenschaften: Transformationspunkt T_{g} und Erweichungspunkt T_{EP} mittels DSC-Methode, Mindestschmelztemperatur Tₛ beim 3-Minuten-Brand auf Glas sowie die Säurebeständigkeit (SB) der eingebrannten Farbe gegen 3 %ige HCl bei Raumtemperatur nach 5 min Einwirkzeit (5-stufige Skala: 1 = abgelöst; 2 = abreibbar, 3 = matt, 4 = schwacher Angriff, 5 = kein Angriff). Zum Einsatz kamen folgende Rohstoffe: Soda, Pottasche, Tonerde und/oder Kryolith, Zinkoxid, Titandioxid, Dehybor, Kieselsäure. Die Rohstoffe wurden bei einer Temperatur um 1100 °C aufgeschmolzen, die Schmelze wurde durch Einlaufenlassen in Wasser abgeschreckt.

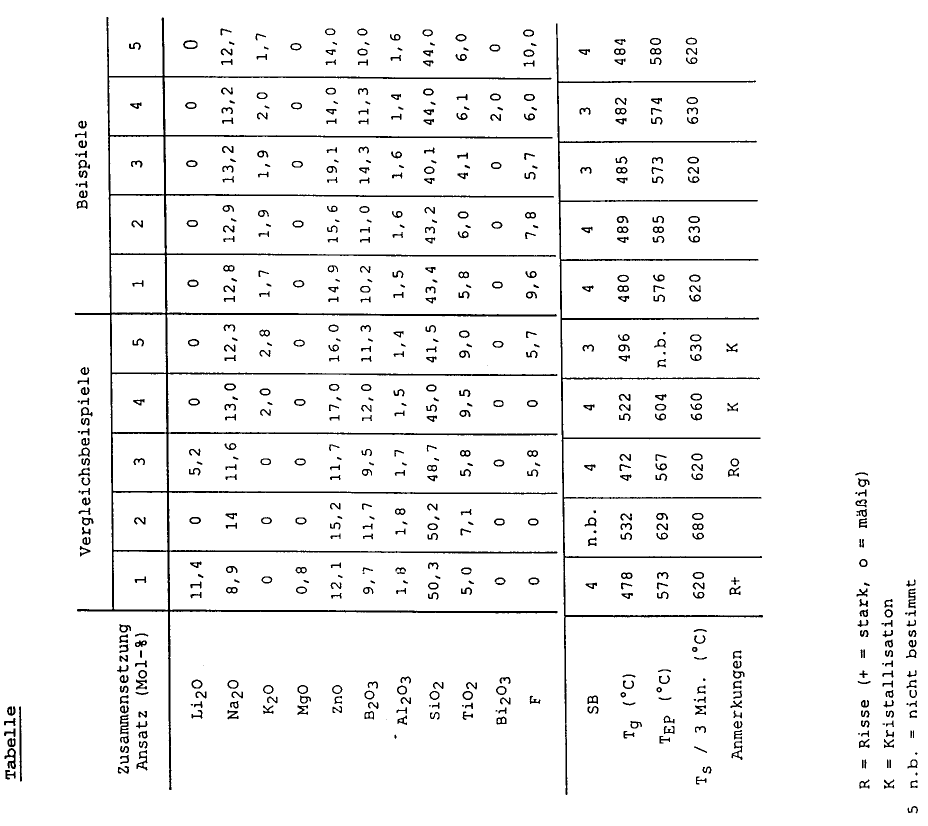

VB1 und VB3 zeigen, daß Li-haltige Fritten zwar zu einem ausreichend niedrigen Tₛ-Wert führen, jedoch steht die mehr oder weniger stark ausgeprägte Rißbildung den Qualitätsanforderungen für Emailglasfritten für Bauglas entgegen. Fluorfreie und Li-freie Fritten gemäß VB2 und VB4 genügen nicht der geforderten Mindestschmelztemperatur Tₛ. Bei höherem TiO₂-Gehalt nimmt zudem die Kristallisationsneigung zu (VB4). Durch Fluorzusatz nimmt zwar der Tₛ-Wert ab, jedoch kommt es auch hier (VB5) bei 9 Mol-% TiO₂ noch zur Kristallisation. Sämtliche erfindungsgemäßen Glasfritten (B1 bis B5) zeigen das geforderte Schmelzverhalten und eine befriedigende bis gute Säureresistenz - Werte von 3 bis 4. Ein Bi₂O₃-Zusatz (B4) bewirkt keine nennenswerte Eigenschaftsveränderung.

### Beispiel 6

Herstellung einer schwarzen Emailschicht auf 6 mm starkem Architekturglas. Das Verfahren umfaßte folgende Maßnahmen:
- Die Rohstoffe wurden gemischt:
   - 61 kg: Fritte gemäß Beispiel 1, feingemahlen (d₅₀∼5 µm)
   - 11 kg: Schwarzfarbkörper: CuCr-Spinell (Cerdec 24052)
   - 28 kg: Siebdruckmedium (Cerdec 80858)
- Fritte, Farbpulver und Medium wurden mit einem üblichen Rührwerk zu einer Paste vermischt und auf einem Dreiwalzwerk homogenisiert.
- Die Druckviskosität von etwa 9 Pa·s durch die Zugabe von weiterem Medium eingestellt.
- Die siebdruckfähige Paste wurde mit einem Siebdruckautomaten mit Polyestergewebe mit 43 Fäden pro cm auf vorbereitete 6 mm Glasplatten aufgedruckt. Die Naßschichtdicke betrug ca. 37 µm.
- Die Trocknung erfolgte mit einem IR-Industrietrockner.
- Der Einbrand der Farbe erfolgte in einem Industrie-Rollen-Ofen mit einer Glastemperatur von 635 °C.
- Die eingebrannte Farbe zeigte eine schwarzglänzende, völlig rißfreie Oberfläche und wies eine Säurebeständigkeit von 4 und eine Laugenbeständigkeit von 5 auf.

## Patentansprüche

1. Glaszusammensetzung, enthaltend in Mol-%
| | |
|---|---|
| Na₂O | 10 - 15 |
| K₂O | 0,1 - 2 |
| Li₂O | kleiner 0,5 |
| SiO₂ | 40 - 50 |
| B₂O₃ | 8 - 12 |
| TiO₂ | 4 - 7 |
| Al₂O₃ | 0,1 - 3 |
| ZnO | 13 - 17 |
| F | 1 - 5 |
und weniger als jeweils 0,5 Gew.-% Oxide aus der Reihe PbO, CdO, P₂O₅ und Erdalkalimetalloxide.

2. Glaszusammensetzung nach Anspruch 1,
dadurch gekennzeichnet,
daß sie im wesentlichen kein Li₂O enthält.

3. Glaszusammensetzung nach Anspruch 1 oder 2,
dadurch gekennzeichnet,
daß sie im wesentlichen aus den Bestandteilen in Mol-% besteht:
| | |
|---|---|
| Na₂O | 10 - 14 |
| K₂O | 0,5 - 2 |
| SiO₂ | 40 - 50 |
| B₂O₃ | 8 - 12 |
| TiO₂ | 4 - 7 |
| Al₂O₃ | 0,5 - 2 |
| ZnO | 13 - 17 |
| F | 1 - 5. |

4. Glaszusammensetzung nach Anspruch 3, bestehend in Mol-% aus im wesentlichen:
| | |
|---|---|
| Na₂O | 11 - 14 |
| K₂O | 1 - 2 |
| SiO₂ | 40 - 45 |
| B₂O₃ | 9 - 11 |
| TiO₂ | 4 - 7 |
| Al₂O₃ | 1 - 2 |
| ZnO | 14 - 16 |
| F | 1 - 3. |

5. Glasfritte, gekennzeichnet durch die Zusammensetzung gemäß einem der Ansprüche 1 bis 4.

6. Glasfritte nach Anspruch 5,
dadurch gekennzeichnet,
daß die Mindestschmelztemperatur beim 3-Minuten-Brand zwischen 600 und 630 °C liegt.

7. Farbzubereitung zur Herstellung von Glasemails und keramischen Dekoren, enthaltend mindestens eine Glasfritte und ein anorganisches keramisches Farbpigment oder/und eine Farbfritte, gekennzeichnet durch einen Gehalt an einer Glasfritte gemäß Anspruch 5 oder 6.

8. Farbzubereitung nach Anspruch 7,
dadurch gekennzeichnet,
daß sie 35 bis 97 Gew.-% einer oder mehrerer Glasfritten gemäß Anspruch 5 oder 6, 3 bis 30 Gew.-% eines oder mehrerer Farbpigmente und 0 bis 35 Gew.-% einer oder mehrerer anderer bleifreier Glasfritten enthält.

9. Farbpaste zur Herstellung von Glasemails und keramischen Dekoren,
dadurch gekennzeichnet,
daß eine Farbzubereitung gemäß Anspruch 7 oder 8 in einem flüssigen Medium in einer für eine spritz-, gieß- oder siebdruckfähige Konsistenz entsprechenden Menge suspendiert ist.

10. Verfahren zur Herstellung eines Glasemails oder keramischen Dekors auf einem einbrennfähigen Substrat, insbesondere Glas, umfassend Aufbringen einer Schicht einer emailbildenden Zusammensetzung auf das Substrat und Einbrennen bei substratangepaßter Temperatur,
dadurch gekennzeichnet,
daß man als emailbildende Zusammensetzung eine Farbzubereitung gemäß Anspruch 7 oder 8 oder eine Farbpaste gemäß Anspruch 9 verwendet.

11. Mit einem Glasemail beschichtetes Architektur- oder Geräteglas,
dadurch gekennzeichnet,
daß das Email eine Zusammensetzung aufweist, wie sie durch Einbrennen einer Farbzubereitung gemäß Anspruch 7 oder 8 oder einer Farbpaste gemäß Anspruch 9 erhalten wird.

12. Verfahren zur Herstellung einer Glasfritte gemäß Anspruch 5 oder 6,
dadurch gekennzeichnet,
daß man übliche Glasrohstoffe in einer Menge entsprechend der molaren Glaszusammensetzung eines der Ansprüche 1 bis 4, ausgenommen fluorhaltige Rohstoffe, welche im bis zu mehrfachen Überschuß gegenüber dem Fluorgehalt in der Glasfritte eingesetzt werden, bei 1000 bis 1200 °C aufschmilzt, die Schmelze abschreckt und das erhaltene brüchige Material aufmahlt.

## Claims

1. Glass composition, containing in mol-%
| | |
|---|---|
| Na₂O | 10 - 15 |
| K₂O | 0.1 - 2 |
| Li₂O | less than 0.5 |
| SiO₂ | 40 - 50 |
| B₂O₃ | 8 - 12 |
| TiO₂ | 4 - 7 |
| Al₂O₃ | 0.1 - 3 |
| ZnO | 13 - 17 |
| F | 1 - 5 |
and less than 0.5 wt.% each of oxides selected from PbO, CdO, P₂O₅ and the alkaline-earth metal oxides.

2. Glass composition according to claim 1,
characterised in that
it contains substantially no Li₂O.

3. Glass composition according to claim 1 or 2,
characterised in that
it consists substantially of the constituents, in mol-%:
| | |
|---|---|
| Na₂O | 10 - 14 |
| K₂O | 0.5 - 2 |
| SiO₂ | 40 - 50 |
| B₂O₃ | 8 - 12 |
| TiO₂ | 4 - 7 |
| Al₂O₃ | 0.5 - 2 |
| ZnO | 13 - 17 |
| F | 1 - 5. |

4. Glass composition according to claim 3, consisting substantially, in mol-%, of:
| | |
|---|---|
| Na₂O | 11 - 14 |
| K₂O | 1 - 2 |
| SiO₂ | 40 - 45 |
| B₂O₃ | 9 - 11 |
| TiO₂ | 4 - 7 |
| Al₂O₃ | 1 - 2 |
| ZnO | 14 - 16 |
| F | 1 - 3. |

5. Glass frit, characterised by the composition according to one of claims 1 to 4.

6. Glass frit according to claim 5,
characterised in that
the minimum melting temperature during the 3-minute firing is between 600°C and 630°C.

7. Colouring formulation for the production of glass enamel and of ceramic decorations, containing at least one glass frit and one inorganic ceramic coloured pigment or/and one coloured frit, characterised by a content of a glass frit according to claim 5 or 6.

8. Colouring formulation according to claim 7,
characterised in that
it contains from 35 to 97 wt.% of one or more glass frits according to claim 5 or 6, from 3 to 30 wt.% of one or more coloured pigments and from 0 to 35 wt.% of one or more other lead-free glass frits.

9. Colouring pastes for the production of glass enamel and of ceramic decorations,
characterised in that
a colouring formulation according to claim 7 or 8 is suspended in a liquid medium in a quantity corresponding to a consistency capable of being sprayed, cast or used in silk-screen processes.

10. A process for the production of a glass enamel or of a ceramic decoration on a substrate capable of being fired, in particular glass, comprising the application to the substrate of a layer of an enamel-forming composition and firing at a temperature adjusted to the substrate, characterised in that
a colouring formulation according to claim 7 or 8 or a colouring paste according to claim 9 is used as the enamel-forming composition.

11. Architectural glass or equipment glass coated with a glass enamel,
characterised in that
the enamel has a composition obtained by firing a colouring formulation according to claim 7 or 8 or a colouring paste according to claim 9.

12. A process for the production of a glass frit according to claim 5 or 6,
characterised in that
conventional raw materials for glass are melted at 1000°C to 1200°C in a quantity corresponding to the molar glass composition of a raw material according to one of claims 1 to 4, with the exception of fluorine-containing raw materials, which are used in the glass frit in an excess of up to several times with regard to the fluorine content, the melt is rapidly cooled and the brittle material obtained is ground.

## Revendications

1. Composition de verre, contenant en % molaire :
| | |
|---|---|
| Na₂O | 10 - 15 |
| K₂O | 0,1 - 2 |
| Li₂O | inférieure à 0,5 |
| SiO₂ | 40 - 50 |
| B₂O₃ | 8 - 12 |
| TiO₂ | 4 - 7 |
| Al₂O₃ | 0,1 - 3 |
| ZnO | 13 - 17 |
| F | 1 - 5 |
et respectivement moins de 0,5 % en poids d'oxydes de la série du PbO, du CdO, du P₂O₅ et des oxydes de métaux alcalino-terreux.

2. Composition de verre selon la revendication 1,
caractérisée en ce qu'
elle ne contient pas essentiellement de LiO₂.

3. Composition de verre selon les revendications 1 ou 2,
caractérisée en ce qu'
elle se compose essentiellement des composants en % molaire :
| | |
|---|---|
| Na₂O | 10 - 14 |
| K₂O | 0,5 - 2 |
| SiO₂ | 40 - 50 |
| B₂O₃ | 8 - 12 |
| TiO₂ | 4 - 7 |
| Al₂O₃ | 0,5 - 2 |
| ZnO | 13 - 17 |
| F | 1 - 5 |

4. Composition de verre selon la revendication 3, se composant essentiellement en % molaire de :
| | |
|---|---|
| Na₂O | 11 - 14 |
| K₂O | 1 - 2 |
| SiO₂ | 40 - 45 |
| B₂O₃ | 9 - 11 |
| TiO₃ | 4 - 7 |
| Al₂O₃ | 1 - 2 |
| ZnO | 14 - 16 |
| F | 1 - 3 |

5. Fritte de verre,
caractérisée par
la composition selon une des revendications 1 à 4.

6. Fritte de verre selon la revendication 5,
caractérisée en ce que
la température minimale de fusion se situe dans le cas de la cuisson de 3 minutes entre 600 et 630°C.

7. Préparation de couleur pour fabriquer des émaux vitrifiés et des décors de céramique, contenant au moins une fritte de verre et un pigment coloré minéral céramique ou/et une fritte colorée,
caractérisée par
une teneur en une fritte de verre selon les revendications 5 ou 6.

8. Préparation de couleur selon la revendication 7,
caractérisée en ce qu'
elle contient 35 à 97 % en poids d'une ou plusieurs frittes de verre selon les revendications 5 ou 6, 3 à 30 % en poids d'un ou plusieurs pigments colorés et 0 à 35 % en poids d'une ou plusieurs autres frittes de verre sans plomb.

9. Pâte de couleur pour la fabrication d'émaux vitrifiés et de décorations céramiques,
caractérisée en ce qu'
une préparation de couleur selon les revendications 7 ou 8 est mise en suspension dans un milieu liquide en une quantité correspondante pour une consistance apte à la pulvérisation à la coulée ou à la sérigraphie.

10. Procédé pour la production d'un émail vitrifié ou d'un décor céramique sur un substrat apte à la cuisson, en particulier du verre, comportant l'application d'une couche d'une composition formatrice d'émail sur le substrat et la cuisson à une température adaptée au substrat,
caractérisé en ce qu'
on utilise comme composition formatrice d'émail une préparation colorée selon les revendications 7 ou 8 ou une pâte colorée selon la revendication 9.

11. Verre architectural ou verre pour appareillages enduit d'un émail vitrifié,
caractérisé en ce que
l'émail a une composition comme elle est obtenue par cuisson d'une préparation colorée selon les revendications 7 ou 8 ou d'une pâte colorée selon la revendication 9.

12. Procédé de fabrication d'une fritte de verre selon les revendications 5 ou 6,
caractérisé en ce qu'
on fond des matières usuelles du verre entre 1000 et 1200°C en une quantité correspondant à la composition molaire du verre d'une des revendications 1 à 4, à l'exception des matières premières contenant du fluor, qui sont utilisées jusqu'à plusieurs fois en excès par rapport à la teneur en fluor dans la fritte de verre, on refroidit le produit fondu et on broie le matériau cassant obtenu.
